Europäisches Patentamt

European Patent Office

Office européen des brevets

(11) Veröffentlichungsnummer : **0 017 870**
**B1**

(12) **EUROPÄISCHE PATENTSCHRIFT**

(45) Veröffentlichungstag der Patentschrift :
23.12.81

(21) Anmeldenummer : 80101809.4

(22) Anmeldetag : 03.04.80

(51) Int. Cl.³ : **E 06 B   3/66, F 24 J   3/02**

(54) **Kastenfenster.**

(30) Priorität : 14.04.79 DE 2915329

(43) Veröffentlichungstag der Anmeldung :
29.10.80 (Patentblatt 80/22)

(45) Bekanntmachung des Hinweises auf die Patenterteilung : 23.12.81 Patentblatt 81/51

(84) Benannte Vertragsstaaten :
AT BE CH FR GB IT LI LU NL SE

(56) Entgegenhaltungen :
DE - A1 - 2 522 160
DE - A1 - 2 613 220
DE - A1 - 2 807 421
DE - A1 - 2 829 523
DE - B1 - 2 417 201
US - A - 4 043 316
US - A - 4 050 443

(73) Patentinhaber : **Meeth, Ernst Josef**

**D-5561 Wallscheid (DE)**

(72) Erfinder : **Meeth, Ernst Josef**

**D-5561 Wallscheid (DE)**

(74) Vertreter : **Schönherr, Wolfgang et al**
**Hawstrasse 28**
**D-5500 Trier (DE)**

Imprimerie Jouve, 17, rue du Louvre, 75001 Paris, France

Kastenfenster

Die Erfindung betrifft ein Kastenfenster mit zwei im Abstand zueinander angeordneten Flügelrahmen mit Glasscheiben sowie diesen zugeordneten Blendrahmen, zwischen denen ein umlaufender, den Raum zwischen den Blendrahmenprofilen überbrückender Hohlprofilrahmen angeordnet ist.

Die bekannten Kastenfenster dieser Art (DE-B-24 17 201) haben die Aufgabe, für eine bessere Wärme- und Schalldämpfung zu sorgen, als dies bei Fenstern mit nur einer Glasscheiben üblicherweise zu erreichen ist.

Bei einem anderen bekannten Kastenfenster (US-A-4 050 443) sind zwischen zwei von einem ortsfest eingebauten Rahmen umgebenen Glasscheiben mehrere Sonnenstrahlen reflektierende und absorbierende Leisten parallel und im Abstand übereinander angeordnet, an denen ein Luftstrom vorbeigeführt wird. Nachteilig ist es dabei, daß das Fenster nicht zu öffnen ist und die Durchsicht eingeschränkt ist. Demgegenüber ist es Aufgabe der Erfindung, ein öffenbares Kastenfenster zu schaffen, das ohne Einschränkung der Durchsicht und ohne Behinderung der Öffnungsmöglichkeit die einwirkende Sonnenenergie auffängt und einem Wärmeverbraucher zuführt.

Zur Lösung dieser Aufgabe ist das Kastenfenster nach der Erfindung dadurch gekennzeichnet, daß der als Wärmekollektor ausgebildete Hohlprofilrahmen mit einem Wärme aufnehmenden Medium gefüllt und mit einem Wärmerückgewinnungsspeicher verbunden ist und daß am Kastenfenster eine die einfallenden Sonnenstrahlen reflektierende Verspiegelungsvorrichtung angeordnet ist.

Vorteilhaft weist die innere Glasscheibe außen eine Verspiegelungsschicht auf. Darüber hinaus weisen die Flügelrahmen an ihren einander zugewandten Innenseiten ebenfalls Spiegelflächen auf.

Nach einer vorteilhaften Ausbildungsform ist der Hohlprofilrahmen als Aluminiumrahmen mit dunkler Oberfläche ausgebildet. An seiner dem Mauerwerk zugewandten Außenseite weist der Hohlprofilrahmen eine Wärmedämmschicht auf. Der Hohlprofilrahmen ist vorteilhaft über ein geschlossenes Leitungssystem mit einem Wärmetauscher verbunden.

Bei einer anderen Ausführungsform ist im Hohlprofilrahmen ein Wärmetauscher angeordnet. Nach einer Weiterbildung weist die Innenseite des Hohlprofilrahmens eine Perforierung auf.

Die Erfindung ist in den Zeichnungen beispielhaft dargestellt. Es zeigen:

Fig. 1 den unteren Teil eines Kastenfensters im Schnitt,

Fig. 2 eine andere Ausführungsform eines Kastenfensters entsprechend der Darstellung nach Fig. 1,

Fig. 3 den zwischen dem Blendrahmen angeordneten Rahmenkollektor mit Anschlußleitung zum Wärmetauscher.

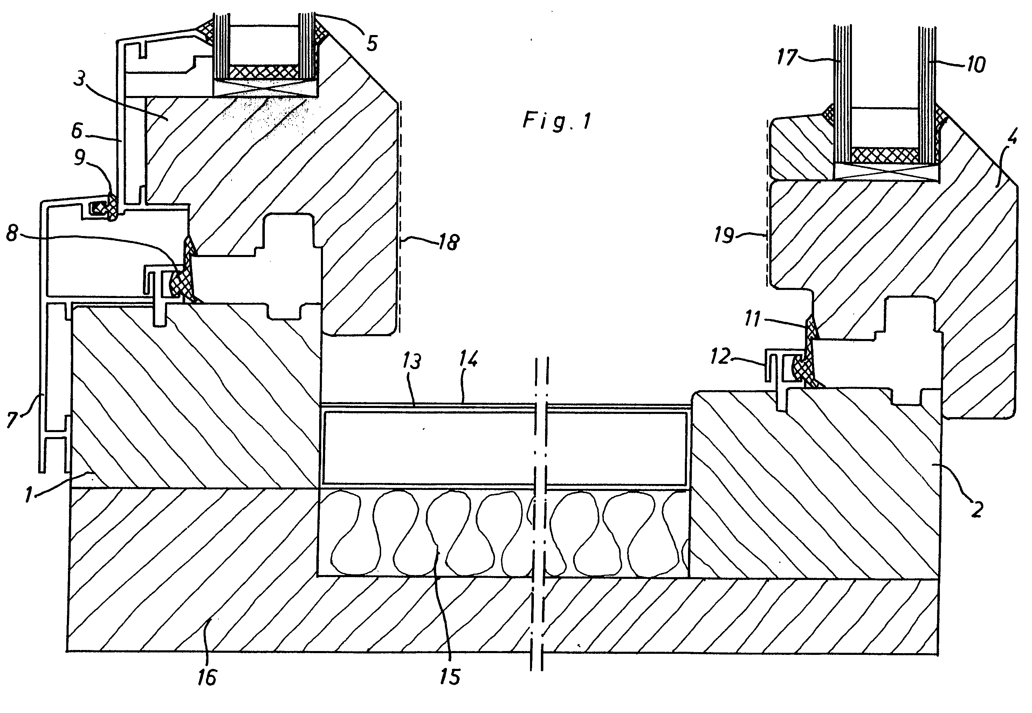

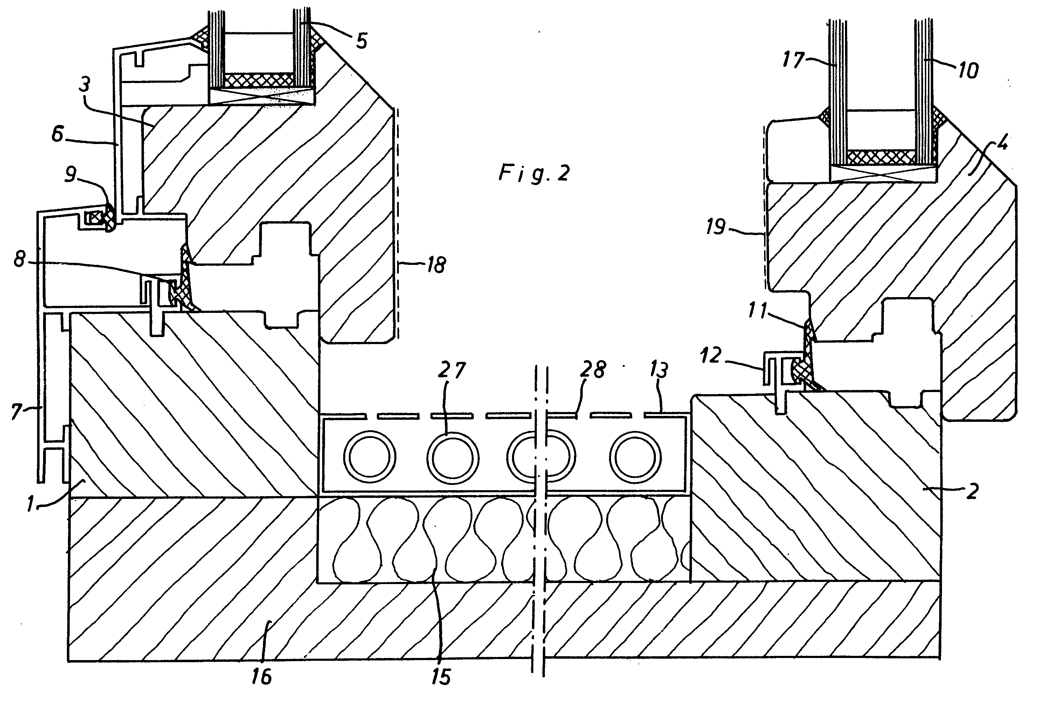

Nach den Fig. 1 oder 2 besteht das Kastenfenster aus zwei im Abstand zueinander angeordneten Blendrahmen 1 und 2 sowie diesen zugeordneten Flügelrahmen 3 und 4. Der Flügelrahmen 3 trägt eine Glasscheibe 5, die als Doppelscheibe ausgebildet sein kann. Ferner hat der Flügelrahmen 3 eine äußere Aluminiumverkleidung 6. Der dem Flügelrahmen 3 zugeordnete Blendrahmen 1 weist ebenfalls eine Aluminiumaußenverkleidung 7 auf die Dichtungsprofile 8 und 9 hält, gegen die der Flügelrahmen 3 in geschlossener Stellung anschlägt.

Der Flügelrahmen 4 trägt eine Glasscheibe 10 und der dem Flügelrahmen 4 zugeordnete Blendrahmen 2 weist ein Dichtungsprofil 11 auf, das von einer Halterung 12 des Blendrahmens gehalten wird.

Zwischen den beiden im Abstand zueinander angeordneten Blendrahmen 1 und 2 ist ein umlaufender Hohlprofilrahmen 13 angeordnet, der den Raum zwischen den beiden Blendrahmen ausfüllt und somit als Abstandshalter dient. Der Hohlprofilrahmen besteht aus Aluminium und hat eine dunkle, vorzugsweise schwarze Oberfläche 14. An seiner dem Mauerwerk zugewandten Außenseite weist der Hohlprofilrahmen 13 eine Wärmedämmschicht 15 auf. Diese Wärmedämmschicht 15 wird durch eine Spanplatte 16 o.dgl. abgedeckt.

Die innere Fensterscheibe 10 hat auf ihrer äußeren Seite eine Verspiegelungsschicht 17, die dafür sorgt, daß die durch die Glasscheibe 5 von außen schräg eindringenden Lichtstrahlen reflektiert und auf die Oberfläche 14 des Hohlprofilrahmens 13 zurückgeworfen werden. Weiterhin sind an den einander zugewandten Innenseiten der Flügelrahmen 3 und 4 Spiegelflächen 18 and 19 vorgesehen, die ebenfalls der Reflektion der Wärmestrahlen dienen.

Der Hohlprofilrahmen 13 ist in sich geschlossen und mit einem Wärme aufnehmenden Medium ausgefüllt, das beispielsweise ein flüssiges oder gasförmiges Medium sein kann.

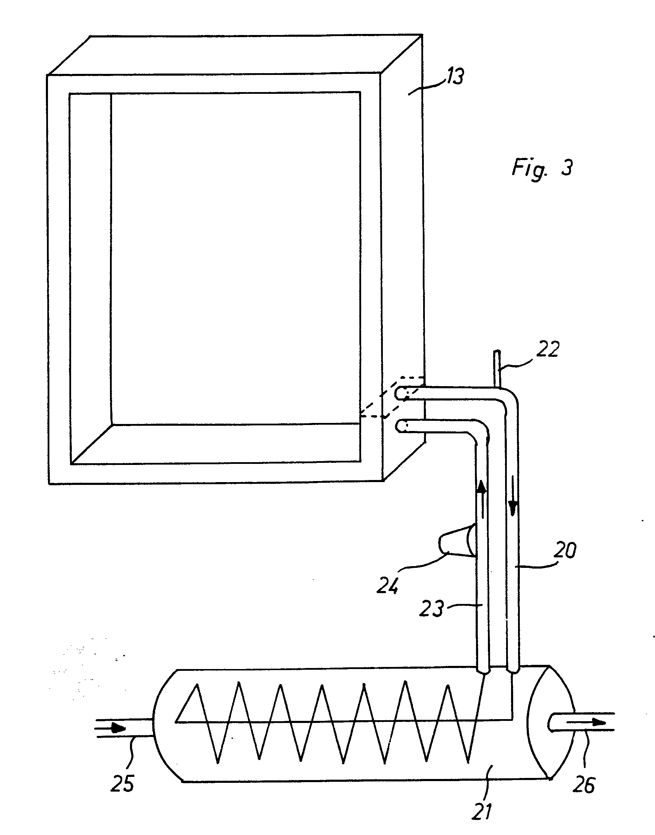

Wie besonders Fig. 3 erkennen läßt, ist der Hohlprofilrahmen 13 über eine Ableitung 20 mit einem Wärmetauscher 21 verbunden. In der Ableitung 20 befindet sich ein Rücklaufthermometer 22. Ferner ist eine Zuleitung 23 zwischen Wärmetauscher und dem als Rahmenkollektor ausgebildeten Hohlprofilrahmen 13 vorgesehen. In dieser Zuleitung befindet sich eine Umwälzpumpe 24.

Der Wärmetauscher 21 hat eine Frischwasserzuleitung 25 und eine Brauchwasserableitung 26.

Bei der Ausführungsform nach Fig. 2 ist der Wärmetauscher 27 in Form von eingebauten Kupferrohren direkt im Hohlprofilrahmen 13 eingebaut. In diesem Falle weist der Hohlprofilrahmen 13 an seiner nach innen weisenden Oberfläche eine Perforierung 28 auf, die gleichzeitig schalldämmende Wirkung hat. Der Wärmetauscher 21 bzw. 27 kann durch ein Relais derart geregelt werden, daß das ankommende Heizmedium bei entsprechenden Temperaturverhältnissen wieder an den Ausgangspunkt, nämlich den als Wärmekollektor ausgebildeten Hohlprofilrahmen zurückgeführt wird, um dadurch eine zusätzliche Wärmedämmung zwischen den beiden im Abstand angeordneten Glasscheiben 5 und 10 zu erreichen.

## Ansprüche

1. Kastenfenster mit zwei im Abstand zueinander angeordneten Flügelrahmen (3, 4) mit Glasscheiben (5, 10) sowie diesen zugeordneten Blendrahmen (1, 2), zwischen denen ein umlaufender, den Raum zwischen den Blendrahmenprofilen überbrückender Hohlprofilrahmen (13) angeordnet ist, dadurch gekennzeichnet, daß der als Wärmekollektor ausgebildete Hohlprofilrahmen (13), mit einem Wärme aufnehmenden Medium gefüllt und mit einem Wärmerückgewinnungsspeicher (21, 27) verbunden ist und daß am Kastenfenster eine die einfallenden Sonnenstrahlen reflektierende Verspiegelungsvorrichtung (17, 18, 19) angeordnet ist.

2. Kastenfenster nach Anspruch 1, dadurch gekennzeichnet, daß die innere Glasscheibe (10) außen eine Verspiegelungsschicht (17) aufweist.

3. Kastenfenster nach Anspruch 1 oder 2, dadurch gekennzeichnet, daß die Flügelrahmen (3, 4) an ihren einander zugewandten Innenseiten Spiegelflächen (18, 19) aufweisen.

4. Kastenfenster nach einem der Ansprüche 1 bis 3, dadurch gekennzeichnet, daß der Hohlprofilrahmen (13) als Aluminiumrahmen mit dunkler Oberfläche (14) ausgebildet ist.

5. Kastenfenster nach einem der Ansprüche 1 bis 4, dadurch gekennzeichnet, daß der Hohprofilrahmen (13) an seiner dem Mauerwerk zugewandten Außenseite eine Wärmedämmschicht (15) aufweist.

6. Kastenfenster nach einem der Ansprüche 1 bis 5, dadurch gekennzeichnet, daß der Hohlprofilrahmen (13) über ein geschlossenes Leitungssystem (20, 23) mit einem Wärmetauscher (21) verbunden ist.

7. Kastenfenster nach einem der Ansprüche 1 bis 5, dadurch gekennzeichnet, daß im Hohlprofilrahmen (13)) ein Wärmetauscher (27) angeordnet ist.

8. Kastenfenster nach Anspruch 7, dadurch gekennzeichnet, daß die Innenseite des Hohlprofilrahmens (13) eine Perforierung (28) aufweist.

## Claims

1. A double window having two sash-frames (3, 4), arranged at a spacing from one another, having panes (5, 10) of glass as well as casings (1, 2), associated with these, between which there is arranged an encircling hollow profile frame (13) which bridges the space between the casing profiles, characterised in that the hollow profile frame (13), designed as a heat collector, ist filled with a medium which absorbs heat and is connected to a heat recovery store (21, 27), and in that a reflecting device (17, 18, 19) which reflects the incident rays of the sun, is arranged on the double window.

2. A double window according to claim 1, characterised in that the inner pane (10) of glass has, on the outside, a reflecting layer (17).

3. A double window according to claim 1 or 2, characterised in that the sash-frames (3, 4) have mirror surfaces (18, 19] on their insides which face one another.

4. A double window according to one of claims 1 to 3, characterised in that the hollow profile frame (13) is designed as an aluminium frame having a dark surface (14).

5. A double window according to one of claims 1 to 4, characterised in that the hollow profile frame (13) has a heat insulating layer (15) on its outside which faces the brickwork.

6. A double window according to one of claims 1 to 5, characterised in that the hollow profile frame (13) is connected to a heat exchanger (21) with a closed conduction system (20, 23).

7. A double window according to one of claims 1 to 5, characterised in that a heat exchanger (27) is arranged in the hollow profile frame (13).

8. A double window according to claim 7, characterised in that the inner side of the hollow profile frame (13) has a perforation (28).

## Revendications

1. Fenêtre à caisson comportant deux châssis de battant (3, 4) espacés entre eux et pourvus de vitres (5, 10) ainsi que des traverses dormantes (1, 2) correspondantes, et entre lesquels est agencé un châssis (13) en profilé creux qui se superpose à l'intervalle qui existe entre les profilés des traverses dormantes, caractérisée en ce que le châssis en profilé creux (13) conçu en tant que capteur thermique est rempli d'un fluide récepteur de chaleur et relié à un accumulateur-récupérateur de chaleur (21, 27), et qu'un dispositif réflecteur, capable de réfléchir les rayons solaires incidents, est prévu sur la fenêtre à caisson.

2. Fenêtre à caisson selon la revendication 1, caractérisée en ce que la vitre interne (10) est pourvue, sur sa face extérieure, d'une couche réfléchissante (17).

3. Fenêtre à caisson selon l'une ou l'autre des revendications 1 ou 2, caractérisée en ce que les châssis de battants (3, 4) comportent des surfaces réfléchissantes (18, 19) sur leurs faces internes disposées en vis-à-vis.

4. Fenêtre à caisson selon l'une quelconque des revendications 1 à 3, caractérisée en ce que le châssis en profilé creux (13) est constitué par un châssis en aluminium à surface de couleur foncée (14).

5. Fenêtre à caisson selon l'une quelconque des revendications 1 à 4, caractérisée en ce que le châssis en profilé creux (13) comporte, sur ses faces extérieures orientées vers la maçonnerie, une couche calorifuge (15).

6. Fenêtre à caisson selon l'une quelconque des revendications 1 à 5, caractérisée en ce que le châssis en profilé creux (13) est relié à un échangeur de chaleur (21) avec un système de tuyau fermé.

7. Fenêtre à caisson selon l'une quelconque des revendications 1 à 5, caractérisée en ce qu'un échangeur de chaleur (27) est prévu dans le châssis en profilé creux (13).

8. Fenêtre à caisson selon la revendication 1, caractérisée en ce que le côté intérieur du châssis en profilé creux (13) est pourvue d'une perforation (28).

Fig. 1

0 017 870

Fig. 2

0 017 870

Fig. 3